# EUROPEAN PATENT SPECIFICATION

(11) **EP 3 074 448 B1**
(45) Date of publication and mention of the grant of the patent: **16.10.2019**
(21) Application number: 14805851.4
(22) Date of filing: 27.11.2014
(51) Int. Cl.: C08G 63/20, C08G 63/52, C09D 167/00, C09D 167/06

(54) **COATING COMPOSITION**
BESCHICHTUNGSZUSAMMENSETZUNG
COMPOSITION DE REVÊTEMENT

(30) Priority: 29.11.2013 EP 13195055
(43) Date of publication of application: 05.10.2016
(73) Proprietor: PPG Industries Ohio, Inc., Cleveland, OH 44111 (US)
(72) Inventor: LOCK, Kam, London E16 2AB (GB); WOODS, Richard, London E16 2AB (GB); AKSEKI, Ibrahim, London SE18 1PE (GB); HARRISON, Beatrice Viginia, London E14 3DU (GB)
(74) Representative: Appleyard Lees IP LLP
(86) International application number: PCT/EP2014/075812
(87) International publication number: WO 2015/078966

(56) References cited:
- US-A1- 2010 204 413
- US-A1- 2011 244 156
- DATABASE WPI Week 200156 Thomson Scientific, London, GB; AN 2001-505206 XP002722493, & JP 2001 106968 A (TOYOBO KK) 17 April 2001 (2001-04-17)

## Description

The present invention relates to coating compositions; in particular to coating compositions for use in food and/or beverage containers.

A wide variety of coatings have been used to coat food and/or beverage containers. The coating compositions are required to have certain properties such as being capable of high speed application, having excellent adhesion to the substrate, being safe for food contact and having properties once cured that are suitable for their end use.

Many of the coating compositions currently used for food and beverage containers contain epoxy resins. Such epoxy resins are typically formed from polyglycidyl ethers of bisphenol A (BPA). BPA is perceived as being harmful to human health and it is therefore desirable to eliminate it from coatings for food and/or beverage packaging containers. Derivatives of BPA such as diglycidyl ethers of bisphenol A (BADGE), epoxy novolak resins and polyols prepared from BPA and bisphenol F (BPF) are also problematic. Therefore there is a desire to provide coating compositions for food and beverage containers which are free from BPA, BADGE and/or other derivatives, but which retain the required properties as described above.

Polyester resins produced by the polycondensation reaction of polyols and polyacids are well known in the coatings industry. Both linear and branched polyesters have been widely used in coating compositions. It is desirable that the polyesters used in coating compositions for packaging have a high glass transition temperature (Tg). Typically, high Tg polyesters have been synthesised from cyclic, polycyclic and aromatic polyols. However, many of these polyesters are not food compact compliant. Alternative polyesters such as polyethylene terephthalate (PET) and polyethylene naphthalate (PEN), which are synthesised from aliphatic polyols, have been used in a solid form for thermoplastics and films.

JP 2001 106968 A discloses a coating composition for a food and/or beverage container, said coating composition comprising a polyester material obtained by the reaction of 1,2-propane diol or 1,2-butanediol, terephthalic acid, another polyacid and/or polyol molecular weight increasing agent, and a crosslinking agent.

It is an object of aspects of the present invention to provide one or more solutions to the above mentioned or other problems.

According to a first aspect of the present invention there is provided a coating composition for a food and/or beverage container comprising a polyester material, wherein the polyester material comprises the reaction product of;
(a) 1,2-propanediol,
(b) terephthalic acid, and
(c) a molecular weight increasing agent,
characterised in that the polyester material has a number-average molecular weight (Mn) of at least 6,100 Da and a glass transition temperature (Tg) of at least 80 °C;
wherein the molecular weight increasing agent (c) comprises a polyacid, a polyol or a combination thereof;
wherein the polyacid comprises a diacid of general formula (I)

ROOC-Xₙ-COOR formula (I)

wherein each R independently represents hydrogen or an alkyl, alkenyl, alkynyl, or aryl group; n = 0 or 1; wherein X represents a bridging group selected from: an alkylene group; an alkenylene group; an alkynylene group; an arylene group; wherein the bridge between the - COOR groups is C₁ or C₂;
and wherein the hydroxyl groups of the polyol are connected by a C₁ to C₃ alkylene group.

By "molecular weight increasing agent" we mean a substance that increases the number-average molecular weight (Mn) of the polyester material.

The molecular weight increasing agent may be any suitable compound capable of increasing the Mn of the polyester material. The molecular weight increasing agent comprises a polyacid, a polyol or a combination thereof.

In certain embodiments, the molecular weight increasing agent comprises a polyacid. "Polyacid" and like terms, as used herein, refers to a compound having two carboxylic acid groups, and includes an ester of the polyacid (wherein one or more of the acid groups is esterified) or an anhydride.

Suitable examples of polyacid molecular weight increasing agents include, but are not limited to one or more of the following: oxalic acid; malonic acid; succinic acid; orthophthalic acid; maleic acid; fumaric acid; itaconic acid; methylmalonic acid; ethylmalonic acid; propylmalonic acid; 2-methylsuccinic acid; 2-ethylsuccinic acid; 2-propylsuccinic acid; trans-cyclopentane-1,2-dicaboxylic acid; cis- cyclopentane-1,2-dicaboxylic acid; transcyclohexane-1,2-dicaboxylic acid; cis-cyclohexane-1,2-dicaboxylic acid; and anhydrides of all the aforementioned acids and combinations thereof. In certain embodiments, the polyacid comprises maleic anhydride or itaconic acid or a combination thereof. Suitably, the polyacid comprises maleic anhydride.

In certain embodiments, the molecular weight increasing agent may comprise a polyol. "Polyol" and like terms, as used herein, refers to a compound having two or more hydroxyl groups. In certain embodiments, the polyol may have two, three or four hydroxyl groups.

Suitably, the polyol may comprise a triol. The hydroxyl groups of the polyol are connected by a C₁ to C₃ alkylene group. The C₁ to C₃ alkylene group may be substituted or unsubstituted. The C₁ to C₃ alkylene group may be optionally substituted with one or more of the following: halo; hydroxyl; nitro; mercapto; amino; alkyl; alkoxy; aryl; sulpho and sulphoxy groups. The C₁ to C₃ alkylene group may be linear or branched. The C₁ to C₃ alkylene group may be saturated or unsaturated. There are no more than 3 carbon atoms connecting between the hydroxyl groups in the polyol.

Suitable examples of polyol molecular weight increasing agents include, but are not limited to one or more of the following: ethylene glycol; neopentyl glycol; 1,3-propane diol; butane 1.3-diol; 2-methyl-1,3-propanediol; 2-ethyl-2-butyl-1,3-propanediol; trimethylolethane; trimethylolpropane; glycerol; pentaerythritol and combinations thereof. Suitably, the polyol comprises trimethylolpropane, glycerol or a combination thereof.

The term "alk" or "alkyl", as used herein unless otherwise defined, relates to saturated hydrocarbon radicals being straight, branched, cyclic or polycyclic moieties or combinations thereof and contain 1 to 20 carbon atoms, suitably 1 to 10 carbon atoms, more suitably 1 to 8 carbon atoms, still more suitably 1 to 6 carbon atoms, yet more suitably 1 to 4 carbon atoms. These radicals may be optionally substituted with a chloro, bromo, iodo, cyano, nitro, OR¹⁹, OC(O)R²⁰, C(O)R²¹, C(O)OR²², NR²³R²⁴, C(O)NR²⁵R²⁶, SR²⁷, C(O)SR²⁷, C(S)NR²⁵R²⁶, aryl or Het, wherein R¹⁹ to R²⁷ each independently represent hydrogen, aryl or alkyl, and/or be interrupted by one or more oxygen or sulphur atoms, or by silano or dialkylsiloxane groups. Examples of such radicals may be independently selected from methyl, ethyl, n-propyl, isopropyl, n-butyl, isobutyl, sec-butyl, tert-butyl, 2-methylbutyl, pentyl, iso-amyl, hexyl, cyclohexyl, 3-methylpentyl, octyl and the like. The term "alkylene", as used herein, relates to a bivalent radical alkyl group as defined above. For example, an alkyl group such as methyl which would be represented as -CH₃, becomes methylene, -CH₂-, when represented as an alkylene. Other alkylene groups should be understood accordingly.

The term "alkenyl", as used herein, relates to hydrocarbon radicals having one or several, suitably up to 4, double bonds, being straight, branched, cyclic or polycyclic moieties or combinations thereof and containing from 2 to 18 carbon atoms, suitably 2 to 10 carbon atoms, more suitably from 2 to 8 carbon atoms, still more suitably 2 to 6 carbon atoms, yet more suitably 2 to 4 carbon atoms. These radicals may be optionally substituted with a hydroxyl, chloro, bromo, iodo, cyano, nitro, OR¹⁹, OC(O)R²⁰, C(O)R²¹, C(O)OR²², NR²³R²⁴, C(O)NR²⁵R²⁶, SR²⁷, C(O)SR²⁷, C(S)NR²⁵R²⁶, or aryl, wherein R¹⁹ to R²⁷ each independently represent hydrogen, aryl or alkyl, and/or be interrupted by one or more oxygen or sulphur atoms, or by silano or dialkylsiloxane groups. Examples of such radicals may be independently selected from alkenyl groups include vinyl, allyl, isopropenyl, pentenyl, hexenyl, heptenyl, cyclopropenyl, cyclobutenyl, cyclopentenyl, cyclohexenyl, 1-propenyl, 2-butenyl, 2-methyl-2-butenyl, isoprenyl, farnesyl, geranyl, geranylgeranyl and the like. The term "alkenylene", as used herein, relates to a bivalent radical alkenyl group as defined above. For example, an alkenyl group such as ethenyl which would be represented as -CH=CH2, becomes ethenylene, -CH=CH-, when represented as an alkenylene. Other alkenylene groups should be understood accordingly.

The term "alkynyl", as used herein, relates to hydrocarbon radicals having one or several, suitably up to 4, triple bonds, being straight, branched, cyclic or polycyclic moieties or combinations thereof and having from 2 to 18 carbon atoms, suitably 2 to 10 carbon atoms, more suitably from 2 to 8 carbon atoms, still more suitably from 2 to 6 carbon atoms, yet more suitably 2 to 4 carbon atoms. These radicals may be optionally substituted with a hydroxy, chloro, bromo, iodo, cyano, nitro, OR¹⁹, OC(O)R²⁰, C(O)R²¹, C(O)OR²², NR²³R²⁴, C(O)NR²⁵R²⁶, SR²⁷, C(O)SR²⁷, C(S)NR²⁵R²⁶, or aryl, wherein R¹⁹ to R²⁷ each independently represent hydrogen, aryl or lower alkyl, and/or be interrupted by one or more oxygen or sulphur atoms, or by silano or dialkylsiloxane groups. Examples of such radicals may be independently selected from alkynyl radicals include ethynyl, propynyl, propargyl, butynyl, pentynyl, hexynyl and the like. The term "alkynylene", as used herein, relates to a bivalent radical alkynyl group as defined above. For example, an alkynyl group such as ethynyl which would be represented as -C≡CH, becomes ethynylene, -C≡C-, when represented as an alkynylene. Other alkynylene groups should be understood accordingly.

The term "aryl" as used herein, relates to an organic radical derived from an aromatic hydrocarbon by removal of one hydrogen, and includes any monocyclic, bicyclic or polycyclic carbon ring of up to 7 members in each ring, wherein at least one ring is aromatic. These radicals may be optionally substituted with a hydroxy, chloro, bromo, iodo, cyano, nitro, OR¹⁹, OC(O)R²⁰, C(O)R²¹, C(O)OR²², NR²³R²⁴, C(O)NR²⁵R²⁶, SR²⁷, C(O)SR²⁷, C(S)NR²⁵R²⁶, or aryl, wherein R¹⁹ to R²⁷ each independently represent hydrogen, aryl or lower alkyl, and/or be interrupted by one or more oxygen or sulphur atoms, or by silano or dialkylsilcon groups. Examples of such radicals may be independently selected from phenyl, p-tolyl, 4-methoxyphenyl, 4-(tert-butoxy)phenyl, 3-methyl-4-methoxyphenyl, 4-fluorophenyl, 4-chlorophenyl, 3-nitrophenyl, 3-aminophenyl, 3-acetamidophenyl, 4-acetamidophenyl, 2-methyl-3-acetamidophenyl, 2-methyl-3-aminophenyl, 3-methyl-4-aminophenyl, 2-amino-3-methylphenyl, 2,4-dimethyl-3-aminophenyl, 4-hydroxyphenyl, 3-methyl-4-hydroxyphenyl, 1-naphthyl, 2-naphthyl, 3-amino-1-naphthyl, 2-methyl-3-amino-1-naphthyl, 6-amino-2-naphthyl, 4,6-dimethoxy-2-naphthyl, tetrahydronaphthyl, indanyl, biphenyl, phenanthryl, anthryl or acenaphthyl and the like. The term "arylene", as used herein, relates to a bivalent radical aryl group as defined above. For example, an aryl group such as phenyl which would be represented as -Ph, becomes phenylene, -Ph-, when represented as an arylene. Other arylene groups should be understood accordingly.

For the avoidance of doubt, the reference to alkyl, alkenyl, alkynyl, aryl or aralkyl in composite groups herein should be interpreted accordingly, for example the reference to alkyl in aminoalkyl or alk in alkoxyl should be interpreted as alk or alkyl above etc.

By "terephthalic acid" it is meant terephthalic acid, ester or salt thereof. The terephthalic acid (b) may be in any suitable form. It will be well known to a person skilled in the art that terephthalic acid is often provided in a form which also contains isophthalic acid as a contaminant. However, in one embodiment, the terephthalic acid may be provided in a form which is substantially free of isophthalic acid. By "substantially free" we mean to refer to terephthalic acid which contains less than about 5 wt% isophthalic acid, suitably less than about 2 wt% isophthalic acid, more suitably less than about 0.05 wt% isophthalic acid. In certain embodiments the terephthalic acid may contain about 0 wt% isophthalic acid.

In certain embodiments the terephthalic acid may be in the form of a diester. Suitable examples of the diester form of terephthalic acid include, but are not limited to one or more of the following: dimethyl terephthalate; diallyl terephthalate; diphenyl terephthalate and combinations thereof.

The polyester material may comprise any suitable molar ratio of components (a):(b) and (a)+(b):(c). In certain embodiments the ratio of (a):(b) may range from about 5:1 to 1:5, such as from about 2:1 to 1:2, or even from about 1:1 to 1:2. Suitably, the molar ratio of (a):(b) in the polyester material may be about 1:1. In certain embodiments the molar ratio of (a)+(b):(c) may range from about 100:1 to 1:1, such as from about 80:1 to 5:1. As a non-limiting example, when component (c) is a polyacid the molar ratio of (a)+(b):(c) may be about 25:1. As a further non-limiting example, when component (c) is a polyol the molar ratio of (a)+(b):(c) may be about 80:1.

According to the invention the Tg is at least about 80 °C. In certain embodiments the Tg may be up to about 100 °C, suitably up to about 120 °C, or even up to about 150 °C. Suitably, the polyester material may have a Tg from about 80 °C to 150 °C, more suitably the polyester material may have a Tg from about 80 °C to 120 °C.

The Tg is measured according to ASTM D6604-00(2013) ("Standard Practice for Glass Transition Temperatures of Hydrocarbon Resins by Differential Scanning Calorimetry". Heat-flux differential scanning calorimetry (DSC), sample pans: aluminium, reference: blank, calibration: indium and mercury, sample weight: 10mg, heating rate: 20°C/min).

According to the invention, the polyester material has an Mn of at least about 6,100 Daltons (Da = g/mole), suitably at least about 6,250 Da, more suitably at least 6,500 Da, such as at least about 7,000 Da, or even at least about 8,000 Da. In certain embodiments the polyester material may have an Mn of up to about 50,000 Da, suitably up to about 30,000 Da, or even up to about 20,000 Da. Suitably, the polyester material may have an Mn from about 6,100 Da to about 50,000 Da, suitably from about 6,250 Da to about 50,000 Da, such as from about 6,500 Da to 50,000 Da, such as from about 7,000 Da to 50,000 Da, or even from about 8,000 Da to 50,000 Da. Suitably, the polyester material may have an Mn from about 6,100 Da to about 20,000 Da, suitably from about 6,250 Da to about 30,000 Da, such as from about 6,500 Da to 30,000 Da, such as from about 7,000 Da to 30,000 Da, or even from about 8,000 Da to 30,000 Da. Suitably, the polyester material may have an Mn from about 6,100 Da to about 20,000 Da, suitably from about 6,250 Da to about 20,000 Da, such as from about 6,500 Da to 20,000 Da, such as from about 7,000 Da to 20,000 Da, or even from about 8,000 Da to 20,000 Da.

It has been surprisingly and advantageously found by the present inventors that the polyester material of the present invention has a high Mn, while retaining a higher Tg than would normally be expected. This is advantageous in that the coating composition according to the present invention has improved film forming properties.

The Mn is determined by gel permeation chromatography using a polystyrene standard according to ASTM D6579-11 ("Standard Practice for Molecular Weight Averages and Molecular Weight Distribution of Hydrocarbon, Rosin and Terpene Resins by Size Exclusion Chromatography". UV detector; 254nm, solvent: unstabilised THF, retention time marker: toluene, sample concentration: 2mg/ml).

A person skilled in the art will appreciated that techniques to measure the number-average molecular weight may also be applied to measure the weight-average molecular weight.

The polyester material may have any suitable weight-average molecular weight (Mw). In certain embodiments, the polyester material may have an Mw of at least about 6,100 Daltons, suitably at least about 8,000 Da, such as at least about 10,000 Da, or even about 15,000 Daltons. In certain embodiments, the polyester material may have an Mw of up to about 50,000 Da, suitably about 100,000 Da, such as about 150,000 Da, or even up to about 200,000 Da. Suitably, the polyester material may have an Mw from about 6,100 Da to about 200,000 Da, suitably from about 8,000 Da to about 200,000 Da, such as from about 10,000 Da to about 200,000 Da, or even from about 15,000 Da to about 200,000 Da. Suitably, the polyester material may have an Mw from about 6,100 Da to about 150,000 Da, suitably from about 8,000 Da to about 150,000 Da, such as from about 10,000 Da to about 150,000 Da, or even from about 15,000 Da to about 150,000 Da. Suitably, the polyester material may have an Mw from about 6,100 Da to about 100,000 Da, suitably from about 8,000 Da to about 100,000 Da, such as from about 10,000 Da to about 100,000 Da, or even from about 15,000 Da to about 100,000 Da. Suitably, the polyester material may have an Mw from about 6,100 Da to about 50,000 Da, suitably from about 8,000 Da to about 50,000 Da, such as from about 10,000 Da to about 50,000 Da, or even from about 15,000 Da to about 50,000 Da.

Suitably, the Mw is higher than the Mn.

Techniques to measure the weight-average molecular weight will be well known to a person skilled in the art. Suitably, the Mw may be determined by gel permeation chromatography using a polystyrene standard.

The polyester material according to the present invention suitably has a low degree of branching. The polyester materials according to the present invention may be substantially linear or be slightly branched. For example, the degree of branching of the polyester material may be measured by the polydispersity index of the said polyester material. The polydispersity index of a polymer is given by the ratio of Mw to Mn (Mw/Mn), wherein Mw is the weight-average molecular weight and Mn is the number average molecular weight. Suitably, the polydispersity index of the polyester materials of the present is from about 1 to 20, suitably from about 2 to 10

In certain embodiments the polyester material may have a molecular weight above the critical entanglement molecular weight of said polyester material.

"Critical molecular weight" or "critical entanglement molecular weight" and like terms, as used herein, refers to the molecular weight at which the polyester material becomes large enough to entangle. For the avoidance of doubt the molecular weight may be the number-average molecular weight or the weight-average molecular weight. Critical entanglement molecular weight is typically defined as the molecular weight at which the physical properties, especially the viscosity of the polymer material, change more rapidly with molecular weight. It is also noted that certain rubber-elastic properties of polymers, such as the rubbery plateau, are only observed above the critical entanglement molecular weight as described in "Properties of Polymer, Their correlation with chemical structure; their numerical estimation and prediction from additive group contributions, 4th Edition" by D. W. Van Krevelen and K Te Nijenhuis, published by Elsevier, Amsterdam 2009, page 400 and references therein.

Typically, the critical entanglement molecular weight is determined by plotting the log of the melt viscosity against the log of the molecular weight of a polymer. Typically, as the molecular weight increases, the plot follows a gently upward sloping linear path. However, once the critical entanglement molecular weight is reached, the gently sloping linear path increases to a more rapidly sloping linear path. This change may occur over a molecular weight range and may appear as a curve rather than a distinct point. Hence, the critical entanglement molecular weight may be determined as the point on the plot where the slope changes from gently sloping to more rapidly sloping; this may require extrapolation of the slopes before and after the change to find the point by intersection of the two lines. Examples of plots of this type showing the critical entanglement molecular weight and a table giving a compilation of critical entanglement molecular weights for a range of polymers are shown in "Properties of Polymer, Their correlation with chemical structure; their numerical estimation and prediction from additive group contributions, 4th Edition" by D. W. Van Krevelen and K Te Nijenhuis, published by Elsevier, Amsterdam 2009, pages 534-536 and references therein.

Techniques to measure the melt viscosity will be well known to a person skilled in the art. Suitably, the melt viscosity may be measured at a high shear rate such as that applied by a cone and plate rheometer, typical methods are as described in standard methods such as ASTM D4287. Films formed from the polyester material according to the present invention having a molecular weight above the critical entanglement molecular weight of the said polyester material, were found to have superior film forming properties.

The polyester material according to the present invention may have any suitable gross hydroxyl value (OHV). In certain embodiments the polyester material may have a gross OHV from about 0 to 30 mg KOH/g. The polyester material may have a gross OHV from about 0 to 20 mg KOH/g, such as from about 5 to 10 mg KOH/g, suitably from about 2 to 5 mg KOH/g. Suitably, the gross OHV is expressed on solids.

The polyester material of the present invention may have any suitable acid value (AV). The polyester material may have an AV from about 0 to 20 mg KOH/g, such as from about 5 to 10 mg KOH/g, suitably from about 2 to 5 mg KOH/g. Suitably, the AV is expressed on solids.

The components (a), (b) and (c) may be contacted in any order.

In certain embodiments, the polyester material may be prepared in a one step process. Suitably, in a one step process, the components (a), (b) and (c) are all reacted together at the same time. Suitably, the polyester material may be prepared in a one step process where the molecular weight increasing agent comprises a polyol.

Suitably, in a one step process, components (a), (b) and (c) may be contacted together at a first reaction temperature, T1, wherein T1 may be a temperature from about 90°C to 260°C, suitably from about 200°C to 250°C, such as from about 200°C to 230°C.

Typically, in a one step process, the reaction is allowed to proceed for a total period from about 1 hour to 100 hours, such as from about 2 hours to 80 hours. It will be appreciated by a person skilled in the art that the reaction conditions may be varied depending on the reactants used.

In certain embodiments the polyester material according to the present invention may be prepared in the presence of a catalyst. Suitably, the catalyst may be chosen to promote the reaction of components by esterification and trans-esterification. Suitable examples of catalysts for use in the preparation of the polyester material include, but are not limited to one or more of the following: metal compounds such as stannous octoate; stannous chloride; butyl stannoic acid (hydroxy butyl tin oxide); monobutyl tin tris (2-ethylhexanoate); chloro butyl tin dihydroxide; tetra-n-propyl titanate; tetra-n-butyl titanate; zinc acetate; acid compounds such as phosphoric acid; para-toluene sulphonic acid; dodecyl benzene sulphonic acid and combinations thereof. The catalyst, when present, may be used in amounts from about 0.001 to 1% by weight on total polymer components, suitably from about 0.01 to 0.2% by weight on total polymer components.

According to a second aspect of the present invention there is provided a coating composition for a food and/or beverage container comprising a polyester material, wherein the polyester material comprises the reaction product of a one step process, the one step process comprising contacting
(a) 1,2-propanediol,
(b) terephthalic acid, and
(c) a polyol molecular weight increasing agent,
characterised in that the polyester material has a number-average molecular weight (Mn) of at least 6,100 Da and a glass transition temperature (Tg) of at least 80 °C;
wherein the molecular weight increasing agent (c) comprises a polyacid, a polyol or a combination thereof;
wherein the polyacid comprises a diacid of general formula (I)

ROOC-Xₙ-COOR formula (I)

wherein each R independently represents hydrogen or an alkyl, alkenyl, alkynyl, or aryl group; n = 0 or 1; wherein X represents a bridging group selected from: an alkylene group; an alkenylene group; an alkynylene group; an arylene group; wherein the bridge between the - COOR groups is C₁ or C₂;
and wherein the hydroxyl groups of the polyol are connected by a C₁ to C₃ alkylene group.

In certain embodiments, the polyester material may be prepared in a two step process. Suitably, in a two step process, two of components (a), (b) and (c) are contacted together in a first step under first reaction conditions, then the remaining component (a), (b) or (c) is contacted with the products of the first step in a second step under second reaction conditions.

In one embodiment of such a two step process, components (a) and (b) are contacted together in a first step under first reaction conditions, then component (c) is contacted with the products of the first step in a second step under second reaction conditions.

Suitably, the polyester material may be prepared in a two step process where the molecular weight increasing agent comprises a polyol or a polyacid.

The first reaction conditions may include a temperature from about 90°C to 260°C, suitably at a temperature from about 150 to 250°C. The temperature from about 90°C and 230°C, suitably from about 150 to 230°C may be maintained for a time period from about 1 hour to 100 hours, such as from 2 hours to 80 hours.

The second reaction conditions may include a temperature from about 90°C to 260°C, suitably at a temperature from about 150°C to 250°C. The temperature from about 90°C to 230°C, suitably from about 150°C to 230°C may be maintained for a time period from about 1 hour to 100 hours, such as from 2 hours to 80 hours.

According to a third aspect of the present invention there is provided a food and/or beverage container coating composition comprising a polyester material, wherein the polyester material comprises the reaction product of a two step process, the two step process comprising:
a first step comprising preparing a polyester prepolymer by contacting
   (a) 1,2-propanediol,
   (b) terephthalic acid, and
a second step comprising contacting the polyester prepolymer with
   (c) a molecular weight increasing agent,
characterised in that the polyester material has a number-average molecular weight (Mn) of at least 6,100 Da and a glass transition temperature (Tg) of at least 80 °C;
wherein the molecular weight increasing agent (c) comprises a polyacid, a polyol or a combination thereof;
wherein the polyacid comprises a diacid of general formula (I)

ROOC-Xₙ-COOR formula (I)

wherein each R independently represents hydrogen or an alkyl, alkenyl, alkynyl, or aryl group; n = 0 or 1; wherein X represents a bridging group selected from: an alkylene group; an alkenylene group; an alkynylene group; an arylene group; wherein the bridge between the - COOR groups is C₁ or C₂;
and wherein the hydroxyl groups of the polyol are connected by a C₁ to C₃ alkylene group.

The coating composition may further comprise one or more solvent. The coating composition may comprise a single solvent or a mixture of solvents. The solvent may comprise water, an organic solvent, a mixture of water and an organic solvent or a mixture of organic solvents.

The organic solvent suitably has sufficient volatility to essentially entirely evaporate from the coating composition during the curing process. As a non-limiting example, the curing process may be by heating at 130-230 °C for 1-15 minutes.

Suitable organic solvents include, but are not limited to one or more of the following: aliphatic hydrocarbons such as mineral spirits and high flash point naphtha; aromatic hydrocarbons such as benzene; toluene; xylene; solvent naphtha 100, 150, 200; those available from Exxon-Mobil Chemical Company under the SOLVESSO trade name; alcohols such as ethanol; n-propanol; isopropanol; and n-butanol; ketones such as acetone; cyclohexanone; methylisobutyl ketone; methyl ethyl ketone; esters such as ethyl acetate; butyl acetate; n-hexyl acetate; glycols such as butyl glycol; glycol ethers such as methoxypropanol; ethylene glycol monomethyl ether; ethylene glycol monobutyl ether and combinations thereof. The solvent, when present, may suitably be used in the coating composition in amounts from about 10 to 90 wt%, such as from about 20 to 80 wt%, or even from about 30 to 70 wt% based on the total solid weight of the coating composition.

The polyester material may be dissolved or dispersed in the said one or more solvent during and/or after its formation. It has been advantageously found by the present inventors that the polyester materials of the present invention have good solubility in solvents commonly used in liquid coatings for packaging.

The coating composition according to the present invention may comprise any suitable amount of the polyester material. The coating compositions may comprise from about 1 to 100 wt%, suitably from about 20 to 90 wt%, such as from about 30 to 80 wt%, or even from about 50 to 75 wt% of the polyester material based on the total solid weight of the coating composition.

In certain embodiments the coating compositions may further comprise a crosslinking agent. The crosslinking agent may be any suitable crosslinking agent. Suitable crosslinking agents will be well known to the person skilled in the art. Suitable crosslinking agents include, but are not limited to one or more of the following: phenolic resins (or phenol-formaldehyde resins); aminoplast resins (or triazine-formaldehyde resins); amino resins; epoxy resins; isocyanate resins; beta-hydroxy (alkyl) amide resins; alkylated carbamate resins; polyacids; anhydrides; organometallic acid-functional materials; polyamines; polyamides and combinations thereof. In certain embodiments, the crosslinking agent comprises a phenolic resin or an aminoplast resin or a combination thereof. Non-limiting examples of phenolic resins are those formed from the reaction of a phenol with formaldehyde. Non-limiting examples of phenols which may be used to form phenolic resins are phenol, butyl phenol, xylenol and cresol. General preparation of phenolic resins is described in "The Chemistry and Application of Phenolic Resins or Phenoplasts", Vol V, Part I, edited by Dr Oldring; John Wiley and Sons/Cita Technology Limited, London, 1997. Suitably, the phenolic resins are of the resol type. By "resol type" we mean resins formed in the presence of a basic (alkaline) catalyst and optionally an excess of formaldehyde. Suitable examples of commercially available phenolic resins include, but are not limited to PHENODUR® PR285 and BR612 and resins sold under the trademark BAKELITE® such as BAKELITE 6582 LB. Non-limiting examples of aminoplast resins include those which are formed from the reaction of a triazine such as melamine or benzoguanamine with formaldehyde. Suitably, the resultant compounds may be etherified with an alcohol such as methanol, ethanol, butanol or combinations thereof. The preparation and use of aminoplast resins is described in "The Chemistry and Applications of Amino Crosslinking Agents or Aminoplast", Vol V, Part II, page 21 ff., edited by Dr Oldring; John Wiley and Sons/Cita Technology Limited, London, 1998. Suitable examples of commercially available aminoplast resins include but are not restricted to those sold under the trademark MAPRENAL® such as MAPRENAL® MF980 and those sold under the trademark CYMEL® such as CYMEL 303 and CYMEL 1128, available from Cytec Industries. Suitably, the crosslinking agent comprises a phenolic resin.

In certain embodiments the coating composition may further comprise a catalyst. Any catalyst typically used to catalyse crosslinking reactions between polyester materials and crosslinking agents, such as for example phenolic resins, may be used. Suitable catalysts will be well known to the person skilled in the art. Suitable catalysts include, but are not limited to one or more of the following: phosphoric acid; alkyl aryl sulphonic acids such as dodecyl benzene sulphonic acid; methane sulphonic acid; para-toluene sulphonic acid; dinonyl naphthalene disulphonic acid; phenyl phosphinic acid and combinations thereof. In certain embodiments the catalyst may comprise an acid catalyst. Suitably, the catalyst may comprise phosphoric acid. The catalyst, when present, may be used in the coating composition in any suitable amount. In certain embodiments the catalyst, when present, may be used in amounts from about 0.01 to 10 wt%, suitably from about 0.1 to 2 wt% based on the total solid weight of the coating composition.

The coating composition according to the present invention may optionally contain an additive or combination of additives. The coating composition may optionally contain any suitable additive. Suitable additives will be well known to the person skilled in the art. Examples of suitable additives include, but are not limited to one or more of the following: lubricants; pigments; plasticisers; surfactants; flow control agents; thixotropic agents; fillers; diluents; organic solvents and combinations thereof.

Suitable lubricants will be well known to the person skilled in the art. Suitable examples of lubricants include, but are not limited to one or more of the following: carnauba wax and polyethylene type lubricants. In certain embodiments the lubricant, when present, may be used in the coating composition in amounts of at least 0.01 wt% based on the total solid weight of the coating composition.

Suitable pigments will be well known to the person skilled in the art. A suitable pigment may be, for example, titanium dioxide. The pigment, when present, may be used in the coating composition in any suitable amount. In certain embodiments, the pigment, when present, may be used in the coating composition in amounts up to about 90 wt%, such as up to about 50 wt%, or even up to about 10 wt% based on the total solid weight of the coating composition.

Surfactants may optionally be added to the coating composition in order to aid in flow and wetting of the substrate. Suitable surfactants will be well known to the person skilled in the art. Suitably the surfactant, when present, is chosen to be compatible with food and/or beverage container applications. Suitable surfactants include, but are not limited to one or more of the following: alkyl sulphates (e.g., sodium lauryl sulphate); ether sulphates; phosphate esters; sulphonates; and their various alkali, ammonium, amine salts; aliphatic alcohol ethoxylates; alkyl phenol ethoxylates (e.g. nonyl phenol polyether); salts and/or combinations thereof. The surfactants, when present, may be present in amounts from about 0.01 wt% to 10 wt% based on the total solid weight of the coating composition.

In certain embodiments, the coating compositions according to the present invention may be substantially free, may be essentially free or may be completely free of bisphenol A (BPA) and derivatives thereof. Derivatives of bisphenol A include, for example, bisphenol A diglycidyl ether (BADGE). In certain embodiments, the coating compositions according to the present invention may also be substantially free or completely free of bisphenol F (BPF) and derivatives thereof. Derivatives of bisphenol F include, for example, bisphenol F diglycidyl ether (BPFG). The compounds or derivatives thereof mentioned above may not be added to the composition intentionally but may be present in trace amounts because of unavoidable contamination from the environment. By "substantially free" we mean to refer to coating compositions containing less than about 1000 parts per million (ppm) of any of the compounds or derivatives thereof mentioned above. By "essentially free" we mean to refer to coating compositions containing less than about 100 ppm of any of the compounds or derivatives thereof mentioned above. By "completely free" we mean to refer to coating compositions containing less than about 20 parts per billion (ppb) of any of the compounds or derivatives thereof.

In certain embodiments, the coating compositions may be essentially fee or may be completely free of dialkyltin compounds, including oxides or other derivatives thereof. Examples of dialkyltin compounds include, but are not limited to one or more of the following: dibutyltindilaurate (DBTDL); dioctyltindilaurate; dimethyltin oxide; diethyltin oxide; dipropyltin oxide; dibutyltin oxide (DBTO); dioctyltinoxide (DOTO) or combinations thereof. By "substantially free" we mean to refer to coating compositions containing less than about 1000 parts per million (ppm) of any of the compounds or derivatives thereof mentioned above. By "essentially free" we mean to refer to coating compositions containing less than about 100 ppm of any of the compounds or derivatives thereof mentioned above. By "completely free" we mean to refer to coating compositions containing less than about 20 parts per billion (ppb) of any of the compounds or derivatives thereof.

The coating compositions according to the present invention may be applied to any suitable food and/or beverage container or components used to fabricate such containers. Suitably, the coating compositions may be applied to food and/or beverage cans. Examples of cans include, but are not limited to one or more of the following, two-piece cans, three-piece cans and the like. The coating compositions may also be applied to containers for aerosol applications such as, but not limited to, deodorant and hair spray containers.

The coating compositions according to the present invention may be applied to the food and/or beverage container by any suitable method. Methods of applying said coating compositions will be well known to a person skilled in the art. Suitable application methods include, but are not limited to one or more of the following, spray coating, roll coating, dipping and/or electrocoating. It will be appreciated by a person skilled in the art that for two-piece cans, one or more of the coating compositions may typically be applied by spray coating after the can is made. It will also be appreciated by the person skilled in the art that for three-piece cans, a flat sheet may typically be roll coated with one or more of the present coating compositions first and then the can may be formed. However, the application of the coating compositions is not limited to these methods. The coating compositions according to the present information may be applied to the interior and/or exterior surface or surfaces of the container. Suitably, all or part of the surface may be covered.

The coating compositions according to the present invention may be applied to any suitable dry film thickness. In certain embodiments the coating compositions may be applied to a dry film thickness from about 0.1 µm (microns) to 2mm, suitably from about 2µm to 2mm, more suitably from about 4µm to 2mm, or even from about 4µm to 1 mm.

The coating composition according to the present invention may be applied to a substrate as a single layer or as part of a multi layer system. In certain embodiments, the coating composition may be applied as a single layer. In certain embodiments, the coating composition may be applied as the first coat of a multi coat system. Suitably, the coating composition may be applied as an undercoat or a primer. The second, third, fourth etc. coats may comprise any suitable paint such as those containing, for example, epoxy resins; polyester resins; polyurethane resins; polysiloxane resins; hydrocarbon resins or combinations thereof. In certain embodiments, the coating compositions may be applied on top of another paint layer as part of a multi layer system. For example, the coating composition may be applied on top of a primer. The coating compositions may form an intermediate layer or a top coat layer. The coating composition may be applied to a substrate once or multiple times.

According to a further aspect of the present invention there is provided a food and/or beverage container coated on at least a portion thereof with a coating composition of any of the above aspects.

All of the features contained herein may be combined with any of the above aspects and in any combination.

For a better understanding of the invention, and to show how embodiments of the same may be carried into effect, reference will now be made, by way of example, to the following experimental data.

### Examples

### Preparation of Polyesters

### Comparative Example 1

### 1,2-propanediol/terephthalic acid polymer

A polyester material made without a molecular weight increasing agent was synthesised. The polymerisation was carried out in a reaction vessel equipped with heating, cooling, stirring and a reflux condenser. A sparge of nitrogen was applied to the reactor to provide an inert atmosphere. 3165.5g 1,2-propanediol (PD), 6805.5g terephthalic acid (TPA) and 5.06g butyl stannoic acid (0.05% on charge) were added to the reaction vessel via a packed column and heated to 185 °C. The reaction vessel was then heated to a maximum temperature of 230 °C and the contents were held at this temperature until the resin had reached clarity and had an acid value (AV) of <10. The reaction vessel was then cooled to 180 °C and a sample was taken in order to measure the hydroxyl value (OHV). The net OHV was adjusted to 8.63 with PD or TPA. The reaction vessel was then reheated to a maximum temperature of 230 °C and held at this temperature until an AV of 3 was achieved. The viscosity was monitored throughout using a CAP 2000+ viscometer and GPC. The resin was discharged from the reaction vessel at 210-220 °C in PTFE trays.

The characteristics of the polyester produced in comparative example 1 were determined and are shown in Table 1.

### Comparative Example 2

### 1,2-propanediol/terephthalic acid/isophthalic acid polymer

A polyester material made with terephthalic acid and isophthalic acid was synthesised. The polymerisation was carried out in a reaction vessel equipped with heating, cooling, stirring and a reflux condenser. A sparge of nitrogen was applied to the reactor to provide an inert atmosphere. 3123.0g 1,2-propanediol (PD), 6125.4g terephthalic acid (TPA), 680.6g isophthalic acid (IPA) and 5.06g butyl stannoic acid (0.05% on charge) were added to the reaction vessel via a packed column and heated to 185 °C. The reaction vessel was then heated to a maximum temperature of 230 °C and the contents were held at this temperature until the resin had reached clarity and had an acid value (AV) of 20-30. Then a small amount of xylene was added to the reaction vessel to convert the process to azeotropic distillation. The reaction vessel was then cooled to 180 °C and a sample was taken in order to measure the hydroxyl value (OHV). The net OHV was adjusted to 4 with PD or TPA. The reaction vessel was then reheated to a maximum temperature of 235 °C and held at this temperature until the in-process viscosity was >2000 Poise at 200 °C as measured with a CAP 2000+ viscometer. The resin was discharged from the reaction vessel at 210-220 °C in PTFE trays.

The characteristics of the polyester produced in comparative example 2 were determined and are shown in Table 1.

### Comparative Example 3

### 1,2-propanediol/terephthalic acid/cyclohexane dimethanol/cyclohexane dicarboxylic acid polymer

A polyester material made with terephthalic acid, cyclohexane dimethanol and cyclohexane dicarboxylic acid was synthesised. The polymerisation was carried out in a reaction vessel equipped with heating, cooling, stirring and a reflux condenser. A sparge of nitrogen was applied to the reactor to provide an inert atmosphere. 1448.60g 1,2-propanediol (PD) was added to the reaction vessel via a packed column followed by 2744.80g 1,4-cyclohexane dimethanol (CHDM), which was previously warmed to melt. The contents were stirred to mix. 5.35g butyl stannoic acid (0.05% on charge), 3271.3g cyclohexane dicarboxylic acid (CHDA) and 3157.3g terephthalic acid (TPA) were further added to the reaction vessel and heated to 160 °C. The reaction vessel was then heated to a maximum temperature of 230 °C and the contents were held at this temperature until the resin had reached clarity and had an acid value (AV) of <15. Then a small amount of SOLVESSO 150 ND (available from Exxon-Mobil Chemical Company) was added to the reaction vessel to convert the process to azeotropic distillation. The reaction vessel was then cooled to 170 °C and a sample was taken in order to measure the hydroxyl value (OHV). The net OHV was adjusted 1 with CHDM and then reaction vessel was heated to 200 °C and held for 2 hours. The OHV was measured again and further adjustment with CHDM was made if required. The reaction vessel was then reheated to a temperature of 230 °C and held at this temperature until the in-process viscosity was 1500-1600 Poise at 200 °C as measured with a CAP 2000+ viscometer. The solids content of the resulting polymer was reduced to 90 wt% by adding SOLVESSO 150 ND to the reaction vessel. The resin was discharged from the reaction vessel at 210-220 °C in PTFE trays.

The characteristics of the polyester produced in comparative example 3 were determined and are shown in Table 1.

### Example 1

### 1,2-propanediol/terephthalic acid/trimethylolpropane (TMP) branched polymer

A polyester material using TMP as the chain increasing agent was synthesised. The polymerisation was carried out in a reaction vessel equipped with heating, cooling, stirring and a reflux condenser. A sparge of nitrogen was applied to the reactor to provide an inert atmosphere. 3010g 1,2-propanediol (PD), 6805.5g terephthalic acid (TPA), 135g trimethylolpropane (TMP) and 5.06g butyl stannoic acid (0.05% on charge) were added to the reaction vessel via a packed column and heated to 185 °C. The reaction vessel was then heated to a maximum temperature of 230 °C and the contents were held at this temperature until the resin had reached clarity and had an acid value (AV) of <5. Then 675g xylene was added to the reaction vessel to convert the process to azeotropic distillation. The reaction vessel was then cooled to 180 °C and a sample was taken in order to measure the hydroxyl value (OHV). The net OHV was adjusted to 1.43 with PD or TPA. The reaction vessel was then reheated to a maximum temperature of 235 °C and held at this temperature until the in-process viscosity was >3000 Poise at 220 °C as measured with a CAP 2000+ viscometer. The resin was discharged from the reaction vessel at 210-220 °C in PTFE trays.

The characteristics of the polyester produced in example 1 were determined and are shown in Table 1.

### Example 2

### 1,2-propanediol/terephthalic acid/glycerol branched polymer

A polyester material using glycerol as the chain increasing agent was synthesised. The polymerisation was carried out in a reaction vessel equipped with heating, cooling, stirring and a reflux condenser. A sparge of nitrogen was applied to the reactor to provide an inert atmosphere. 3010g 1,2-propanediol (PD), 6805.5g terephthalic acid (TPA), 93g glycerol and 5.03g butyl stannoic acid (0.05% on charge) were added to the reaction vessel via a packed column and heated to 180 °C. The reaction vessel was then heated to a maximum temperature of 230 °C and the contents were held at this temperature until the resin had reached clarity and had an acid value (AV) of <5. Then 675g xylene was added to the reaction vessel to convert the process to azeotropic distillation. The reaction vessel was then cooled to 180 °C and a sample was taken in order to measure the hydroxyl value (OHV). The net OHV was adjusted to 1.44 with PD or TPA. The reaction vessel was then reheated to a maximum temperature of 230 °C and held at this temperature until the in-process viscosity was approximately 2500 Poise at 220 °C as measured with a CAP 2000+ viscometer. The resin was discharged from the reaction vessel at 200 °C in PTFE trays.

The characteristics of the polyester produced in example 2 were determined and are shown in Table 1.

### Test Methods

**Molecular Weight Determination:** The number-average molecular weight and weight-average molecular weight were measured using gel permeation chromatography (also known as size exclusion chromatography) according to ASTM D6579-11.

Briefly, a Waters Corporation liquid chromatography system comprising a series of three size exclusion columns; 2 x PLgel™ 5µm MIXED-D columns (300mm x 7.5mm from Agilent Technologies) and 1 x PLgel™ 5µm 50Å (300mm x 7.5mm from Agilent Technologies) and a UV detector tuned to 254nm was used to conduct the experiments. The columns were first calibrated with polystyrene standards of known molecular weight (2348 kDa, 841.7 kDa, 327.3 kDa, 152.8 kDa, 60.45 kDa, 28.77 kDa, 10.44 kDa, 2.94 kDa, and 0.58 kDa where kDa = 1000 Da = 1000 g/mol). The standards were dissolved in unstabilised THF as mixtures of 4-6 molecular weight standards per sample. The standards were run under the same conditions as were used for the polyester material samples.

Samples were prepared by dissolving 0.01g to 0.05g of the polymer materials prepared according to comparative examples 1 and 2 and examples 1 and 2 above in 4 ml unstabilised tetrahydrofuran (THF). 20µl was injected for each run. The experiment was conducted at a flow rate of 0.9 ml/min and the system was maintained at a constant temperature of 22 °C throughout. Data were collected using Turbochrom 4 software from Perkin Elmer. The data were then processed using Turbochrom and Turbogel software from Perkin Elmer.

**Glass Transition Temperature:** The glass transition temperature of the polyester materials were measured according to ASTM D6604-00(2013).

Briefly, the polymer samples were dissolved in tetrahydrofuran (THF) and then vacuum dried. 10mg of the dried samples were placed in an aluminium pan in the differential scanning calorimeter along with an empty aluminium pan as the reference sample. A preliminary thermal cycle was performed from ambient temperature to 190 °C at a heating rate of 20 °C/min. The temperature was then held isothermally at 200 °C for 10 minutes before being crash cooled to -60 °C with liquid nitrogen. The temperature was then held isothermally at this temperature (-60 °C) for 13 minutes. Finally, the temperature of the sample was increased from -60 °C to 200 °C at a rate of 20 °C/min and the heating curve was recorded.

**Table 1. Characteristics of Polyester Comparative Examples 1-3 and Examples 1-2**

| | **Comparative Example 1** | **Comparative Example 2** | **Comparative Example 3** | **Example 1** | **Example 2** |
|---|---|---|---|---|---|
| Solids content | 93-97% | - | 90.0% | - | - |
| Acid Value (AV) / mg KOH/g | 7.2 | 11.2 | 6.5 | 9.3 | 10.3 |
| Viscosity / Poise | 445 @ 200°C | >2000 @ 200°C | ∼1600 @ 200°C | >3000 @ 200°C | -2500 @ 200°C |
| Net hydroxyl value (OHV) / mg KOH/g | 4.3 | -7.7 | -3.1 | -2.9 | -2.57 |
| Gross OHV / mg KOH/g | 11.5 | 3.5 | 3.4 | 6.4 | 7.73 |
| Mn (GPC) / Da | 6,000 | 5,408 | 11,310 | 8,358 | 8,296 |
| Mw (GPC) / Da | - | 14,050 | 50,300 | 80,930 | 58,910 |
| Mw/Mn | - | 2.60 | 4.45 | 9.68 | 7.10 |
| Tg / °C | 89.5 | 82.1 | 67 | 95.4 | 95.7 |
| Appearance | Hard pale yellow solid | Clear light golden brown solid | Hard pale yellow solid | Pale yellow solid | Pale yellow solid |

| | | | | | |
|---|---|---|---|---|---|
| ^{‡} Following dilution with SOLVESSO 100 in the reactor | | | | | |

The results show that when the PD/TPA polyester material is made without the addition of a molecular weight increasing agent, as in comparative examples 1 and 2, it had proven difficult to achieve Mn above 6,000 Da. Further, when isophthalic acid is added as a monomer component a slight reduction in Tg was observed. Higher Mn polyester materials can be prepared by the incorporation of other polyol and polyacid, as in comparative example 3, but resulted in a significant reduction in polymer Tg. However, upon the addition of a molecular weight increasing agent according to the invention, it is possible to increase the Mn to above about 6,100 Da, while maintaining a high Tg.

### Preparation of Coatings

### Comparative coating examples 1-6

2750g of the polyester prepared in comparative polyester example 1 was added to 1687.5g SOLVESSO 150 ND (available from Exxon-Mobil Chemical Company) and 562.5g 2-butoxyethanol. The coating compositions were then formulated as outlined in Table 2.

### Comparative coating examples 7-9

2500g of the polyester prepared in comparative polyester example 3 was added to 2500.0g SOLVESSO 100 (available from Exxon-Mobil Chemical Company). The coating compositions were then formulated as outlined in Table 3.

### Coating examples 10-15

2432g of the polyester prepared in polyester example 1 was added to 1743g SOLVESSO 150 ND (available from Exxon-Mobil Chemical Company) and 825g dibasic ester. The coating compositions were then formulated as outlined in Table 4.

### Coating examples 16-18

2432g of the polyester prepared in polyester example 2 was added to 1743g SOLVESSO 150 ND (available from Exxon-Mobil Chemical Company) and 825g dibasic ester. The coating compositions were then formulated as outlined in Table 5.

The properties of the coatings were tested via the following methods. Results are shown in Tables 2-7. The lactic acid sterilisation test was only performed on comparative coatings 7-9 and coatings 10-18, which are shown in Tables 6 and 7, respectively.

### Test Methods

**Test Panel Preparation:** The coating samples were applied onto 0.22mm tinplate using a wire wound bar coater to give a 5-6g/square metre dried coating weight. The coated panels were transferred to a laboratory box oven for 10 minutes at 190 °C.

**MEK Rub Test:** The number of reciprocating rubs required to remove the coating was measured using a ball of cotton wool soaked in methyl ethyl ketone (MEK).

**Wedge Bend Test:** A 10cm x 4cm coated panel was bent on a 6mm steel rod to form a U-shaped strip 10cm long and 2cm wide. The U-shaped strip was then placed onto a metal block with a built in tapered recess. A 2kg weight was dropped onto the recessed block containing the U-shaped strip from a height of 60cm in order to from a wedge. The test piece was then immersed in a copper sulphate (CuSO₄) solution acidified with hydrochloric acid (HCI) for 2 minutes, followed by rinsing with tap water. The sample was then carefully dried by blotting any residual water with tissue paper. The length of coating without any fracture was measured. The result was quoted in mm passed. The wedge bends were tested in triplicate and the average value was quoted.

**Lactic acid sterilisation:** This test is used to determine if the coatings are compatible for use in food and/or beverage containers. The coated panels were half immersed in a deionised water solution comprising 1% lactic acid inside a Kilner jar and sterilised for 1 hour at 130 °C in an autoclave. After this time, the coated panels were quickly removed whilst still hot and rinsed whilst under cold water. The portion of the coated panel immersed in lactic acid and the portion exposed to the vapour, which was produced during the sterilisation process, were assessed separately for extent of damage. Four aspects were graded;
(A) Coating surface damage (visual assessment; 0 = no damage/defect, 5 = severe damage/defect)
(B) Extent of blushing wherein the coating turns hazy due to water trapped in the coating (visual assessment; 0 = no damage/defect, 5 = severe damage/defect)
(C) Substrate corrosion (visual assessment; 0 = no damage/defect, 5 = severe damage/defect)
(D) % coating adhesion loss (assessed by making a cross hatch on the coating and taping with Scotch 610 tape; % of coating after taping)

**Table 2. Comparative coating compositions 1-6 and test results**

| | **Comparative Coating 1** | **Comparative Coating 2** | **Comparative Coating 3** | **Comparative Coating 4** | **Comparative Coating 5** | **Comparative Coating 6** |
|---|---|---|---|---|---|---|
| Comparative polyester example 1 | 72.7 | 64.9 | 53.5 | 73.8 | 66.6 | 55.8 |
| Phenolic 1* | 9 | 16 | 26.3 | - | - | - |
| Phenolic 2** | - | - | - | 7.5 | 13.5 | 22.7 |
| Phenolic 3*** | - | - | - | - | - | - |
| Catalyst* | 4.4 | 4.4 | 4.4 | 4.4 | 4.4 | 4.4 |
| BYK 310^{‡‡} | 0.1 | 0.1 | 0.1 | 0.1 | 0.1 | 0.1 |
| SOLVESSO 150 ND | 10.4 | 11 | 11.8 | 14.2 | 15.3 | 17 |
| 2-butoxyethanol | 3.5 | 3.7 | 3.9 | - | - | - |
| Propylene carbonate | - | - | - | 14.2 | 15.3 | 17 |
| Total | 100 | 100 | 100 | 100 | 100 | 100 |
| MEK Rubs | 2 | 2 | 13 | 3 | 5 | 11 |
| Wedge Bend | 0 | 7 | 0 | 74 | 70 | 53 |

**Table 3. Comparative coating compositions 7-9 and test results**

| | **Comparative Coating 7** | **Comparative Coating 8** | **Comparative Coating 9** |
|---|---|---|---|
| Comparative polyester example 3 | 79.2 | 71.6 | 60.1 |
| Phenolic 1* | 7.0 | 12.7 | 21.4 |
| Phenolic 2** | - | - | - |
| Phenolic 3*** | - | - | - |
| Catalyst* | 2.4 | 2.4 | 2.4 |
| BYK 310^{‡‡} | 0.1 | 0.1 | 0.1 |
| SOLVESSO 100 | 11.3 | 13.2 | 16.0 |
| 2-butoxyethanol | - | - | - |
| Propylene carbonate | - | - | - |
| Total | 100 | 100 | 100 |
| MEK Rubs | 1 | 1 | 2 |
| Wedge Bend | 90 | 90 | 85 |

**Table 4. Coating compositions 10-15 and test results**

| | **Coating 10** | **Coating 11** | **Coating 12** | **Coating 13** | **Coating 14** | **Coating 15** |
|---|---|---|---|---|---|---|
| Polyester example 1 | 82.4 | 73.9 | 61.2 | 77.7 | 69.6 | 57.6 |
| Phenolic 1* | 7.7 | 13.7 | 22.7 | | | |
| Phenolic 2** | - | - | - | - | - | - |
| Phenolic 3*** | - | - | - | 7.7 | 13.8 | 22.9 |
| Catalyst^{‡} | 3.1 | 3.1 | 3.1 | 3.1 | 3.1 | 3.1 |
| BYK 310^{‡‡} | 0.1 | 0.1 | 0.1 | 0.1 | 0.1 | 0.1 |
| SOLVESSO 150 ND | 6.8 | 9.2 | 12.8 | 11.3 | 13.3 | 16.2 |
| Total | 100 | 100 | 100 | 100 | 100 | 100 |
| MEK Rubs | 6 | 15 | 22 | 4 | 170 | >200 |
| Wedge Bend | 91 | 92 | 88 | 87 | 79 | 67 |

**Table 5. Coating compositions 16-18 and test results**

| | **Coating 16** | **Coating 17** | **Coating 18** |
|---|---|---|---|
| Polyester example 2 | 77.3 | 69.3 | 57.4 |
| Phenolic 1* | 7.7 | 13.8 | 22.8 |
| Phenolic 2** | - | - | - |
| Phenolic 3*** | - | - | - |
| Catalyst* | 3.1 | 3.1 | 3.1 |
| BYK 310^{‡‡} | 0.1 | 0.1 | 0.1 |
| SOLVESSO 150 ND | 11.8 | 13.7 | 16.6 |
| Total | 100 | 100 | 100 |
| MEK Rubs | 7 | 18 | 157 |
| Wedge Bend | 90 | 91 | 86 |

| | | | |
|---|---|---|---|
| *Phenodur PR516/B60 from Cytec Industries Inc. **Bakelite PF 6535LB from Hexion Speciality Chemicals ***BDP2201 from Bit Rez Ltd. ^{‡}5 weight% of o-phosphoric acid in 1-methoxy-2-propanol ^{‡‡}From BYK-Chemie | | | |

**Table 6. Results of lactic acid sterilisation test on comparative coatings 7-9**

| | | **Comparative Coating 7** | **Comparative Coating 8** | **Comparative Coating 9** |
|---|---|---|---|---|
| Vapour | A | 3.5 | 3 | 0 |
| | B | 3 | 1 | 0 |
| | C | 0 | 0 | 0 |
| | D | 5% | 5% | 5% |
| Immersed | A | 5.5 | 5.5 | 2 |
| | B | 4 | 3 | 1 |
| | C | 0 | 0 | 0 |
| | D | 5% | 5% | 5% |

**Table 7. Results of lactic acid sterilisation tests on coatings 10-18**

| | | **Coating 10** | **Coating 11** | **Coating 12** | **Coating 13** | **Coating 14** | **Coating 15** | **Coating 16** | **Coating 17** | **Coating 18** |
|---|---|---|---|---|---|---|---|---|---|---|
| Vapour | A | 3 | 0 | 0 | 3 | 0 | 0 | 3 | 3 | 3 |
| | B | 2 | 1 | 1 | 1 | 1 | 1 | 2 | 3 | 2 |
| | C | 0 | 0 | 0 | 0 | 0 | 0 | 0 | 0 | 0 |
| | D | 0% | 0% | 0% | 5% | 5% | 5% | 5% | 5% | 5% |
| Immersed | A | 2 | 2 | 2 | 0 | 0 | 0 | 2 | 2 | 0 |
| | B | 4 | 3 | 2 | 4 | 3 | 3 | 5 | 3 | 2 |
| | C | 0 | 0 | 0 | 0 | 0 | 0 | 0 | 0 | 0 |
| | D | 5% | 5% | 5% | 5% | 5% | 5% | 5% | 5% | 5% |

The results show that there is more attack on the coating surface by lactic acid when a polyester material with a lower Tg, as in comparative coating examples 7 and 8, is used.

Solvent rubs is a common method used in the coatings industry to compare the extent of cure as well as the chemical resistance of coatings. It can be clearly seen that the MEK rub resistance of coatings comprising the polyester materials according to the present invention (coating examples 10 to 18) are significantly higher than those made from the comparative polymer examples (comparative coating examples 1 to 9).

Another important requirement in packaging coatings is the resistance to acidic medium under sterilisation conditions. A typical approach is to increase the amount of crosslinker in the coating formulation, but this generally leads to a reduction in flexibility. The lactic acid sterilisation results clearly show that coatings according to the present invention (coating examples 10 to 18) are more resistant with lower amount of crosslinking resins compared to the comparative examples (comparative coatings 7 to 9) containing the same amounts of crosslinking resin.

All of the features disclosed in this specification (including any accompanying claims, abstract and drawings), and/or all of the steps of any method or process so disclosed, may be combined in any combination, except combinations where at least some of such features and/or steps are mutually exclusive.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A coating composition for a food and/or beverage container comprising a polyester material, wherein the polyester material comprises the reaction product of;
(a) 1,2-propanediol,
(b) terephthalic acid, and
(c) a molecular weight increasing agent,
**characterised in that** the polyester material has a number-average molecular weight (Mn) of at least 6,100 Da as measured by gel permeation chromatography using a polystyrene standard according to ASTM D6579-11 and a glass transition temperature (Tg) of at least 80 °C as measured according to ASTM D6604-00(2013);
wherein the molecular weight increasing agent (c) comprises a polyacid, a polyol or a combination thereof;
wherein the polyacid comprises a diacid of general formula (I)
ROOC-Xₙ-COOR formula (I)
wherein each R independently represents hydrogen or an alkyl, alkenyl, alkynyl, or aryl group;
n = 0 or 1; wherein X represents a bridging group selected from: an alkylene group; an alkenylene group; an alkynylene group; an arylene group; wherein the bridge between the -COOR groups is C₁ or C₂;
and wherein the hydroxyl groups of the polyol are connected by a C₁ to C₃ alkylene group.

2. A coating composition according to claim 1, wherein the polyacid comprises maleic anhydride or itaconic acid or a combination thereof

3. A coating composition according to either of claims 1 or 2, wherein the polyol comprises trimethylolpropane, glycerol or a combination thereof.

4. A coating composition according to any preceding claim, wherein the molar ratio of (a):(b) ranges from 5:1 to 1:5.

5. A coating composition according to any preceding claim, wherein the molar ratio of (a)+(b):(c) ranges from 100:1 to 1:1.

6. A coating composition according to any preceding claim, wherein the coating compositions comprise from 1 to 100 wt% of the polyester material based on the total solid weight of the coating composition.

7. A coating composition according to any preceding claim, wherein the coating composition further comprises a crosslinking agent.

8. A coating composition according to claim 7, wherein the crosslinking agent comprises a phenolic resin.

9. A coating composition according to any preceding claim, wherein the polyester material has a gross hydroxyl value (OHV) from 0 to 30 mg KOH/g.

10. A coating composition according to any preceding claims, wherein the polyester material has an acid value (AV) from 0 to 20 mg KOH/g.

11. A coating composition according any preceding claim, wherein the coating composition comprises from 1 to 100 wt% of the polyester material based on the total solid weight of the coating composition.

12. A coating composition according to any preceding claim, wherein the coating composition further comprises an additive or combination of additives.

13. A coating composition for a food and/or beverage container comprising a polyester material, wherein the polyester material comprises the reaction product of a one step process, the one step process comprising contacting:
(a) 1,2-propanediol,
(b) terephthalic acid, and
(c) a polyol molecular weight increasing agent,
**characterised in that** the polyester material has a number-average molecular weight (Mn) of at least 6,100 Da as measured by gel permeation chromatography using a polystyrene standard according to ASTM D6579-11 and a glass transition temperature (Tg) of at least 80 °C as measured according to ASTM D6604-00(2013);
wherein the molecular weight increasing agent (c) comprises a polyacid, a polyol or a combination thereof;
wherein the polyacid comprises a diacid of general formula (I)
ROOC-Xₙ-COOR formula (I)
wherein each R independently represents hydrogen or an alkyl, alkenyl, alkynyl, or aryl group;
n = 0 or 1; wherein X represents a bridging group selected from: an alkylene group; an alkenylene group; an alkynylene group; an arylene group; wherein the bridge between the -COOR groups is C₁ or C₂;
and wherein the hydroxyl groups of the polyol are connected by a C₁ to C₃ alkylene group.

14. A coating composition according to any preceding claim, which is substantially free of bisphenol A (BPA) and derivatives thereof.

15. A food and/or beverage container coated on at least a portion thereof with a coating composition of any of the preceding claims.

## Patentansprüche

1. Beschichtungszusammensetzung für einen Lebensmittel- und/oder Getränkebehälter, umfassend ein Polyestermaterial, wobei das Polyestermaterial das Reaktionsprodukt von
(a) 1,2-Propandiol,
(b) Terephthalsäure und
(c) einem Mittel zur Erhöhung des Molekulargewichts
umfasst,
**dadurch gekennzeichnet, dass** das Polyestermaterial ein zahlenmittleres Molekulargewicht (Mn) von mindestens 6100 Da gemäß Messung durch Gelpermeationschromatographie unter Verwendung eines Polystyrol-Standards nach ASTM D6579-11 und eine Glasübergangstemperatur (Tg) von mindestens 80 °C gemäß Messung nach ASTM D6604-00 (2013) aufweist; wobei das Mittel zur Erhöhung des Molekulargewichts (c) eine Polysäure, ein Polyol oder eine Kombination davon umfasst;
wobei die Polysäure eine Disäure der allgemeinen Formel (I)
**ROOC-Xₙ-COOR** Formel (I)
umfasst, wobei R jeweils unabhängig für Wasserstoff oder eine Alkyl-, Alkenyl-, Alkinyl- oder Arylgruppe steht;
n = 0 oder 1; wobei X für eine Brückengruppe steht, die aus einer Alkylengruppe, einer Alkenylengruppe, einer Alkinylengruppe und einer Arylengruppe ausgewählt ist; wobei die Brücke zwischen den -COOR-Gruppen C₁ oder C₂ ist;
und wobei die Hydroxylgruppen des Polyols über eine C₁- bis C₃-Alkylengruppe verbunden sind.

2. Beschichtungszusammensetzung nach Anspruch 1, wobei die Polysäure Maleinsäureanhydrid oder Itaconsäure oder eine Kombination davon umfasst.

3. Beschichtungszusammensetzung nach Anspruch 1 oder 2, wobei das Polyol Trimethylolpropan, Glycerin oder eine Kombination davon umfasst.

4. Beschichtungszusammensetzung nach einem der vorhergehenden Ansprüche, wobei das Molverhältnis von (a):(b) im Bereich von 5:1 bis 1:5 liegt.

5. Beschichtungszusammensetzung nach einem der vorhergehenden Ansprüche, wobei das Molverhältnis von (a) + (b) : (c) im Bereich von 100:1 bis 1:1 liegt.

6. Beschichtungszusammensetzung nach einem der vorhergehenden Ansprüche, wobei die Beschichtungszusammensetzungen 1 bis 100 Gew.-% des Polyestermaterials, bezogen auf das Gesamtfeststoffgewicht der Beschichtungszusammensetzung, umfassen.

7. Beschichtungszusammensetzung nach einem der vorhergehenden Ansprüche, wobei die Beschichtungszusammensetzung ferner ein Vernetzungsmittel umfasst.

8. Beschichtungszusammensetzung nach Anspruch 7, wobei das Vernetzungsmittel ein Phenolharz umfasst.

9. Beschichtungszusammensetzung nach einem der vorhergehenden Ansprüche, wobei das Polyestermaterial eine Brutto-Hydroxylzahl (OHZ) von 0 bis 30 mg KOH/g aufweist.

10. Beschichtungszusammensetzung nach einem der vorhergehenden Ansprüche, wobei das Polyestermaterial eine Säurezahl (SZ) von 0 bis 20 mg KOH/g aufweist.

11. Beschichtungszusammensetzung nach einem der vorhergehenden Ansprüche, wobei die Beschichtungszusammensetzung 1 bis 100 Gew.-% des Polyestermaterials, bezogen auf das Gesamtfeststoffgewicht der Beschichtungszusammensetzung, umfasst.

12. Beschichtungszusammensetzung nach einem der vorhergehenden Ansprüche, wobei die Beschichtungszusammensetzung ferner ein Additiv oder eine Kombination von Additiven umfasst.

13. Beschichtungszusammensetzung für einen Lebensmittel- und/oder Getränkebehälter, umfassend ein Polyestermaterial, wobei das Polyestermaterial das Reaktionsprodukt eines einschrittigen Verfahrens umfasst, wobei das einschrittige Verfahren das Inberührungbringen von
(a) 1,2-Propandiol,
(b) Terephthalsäure und
(c) einem Mittel zur Erhöhung des Molekulargewichts vom Polyol-Typ
umfasst,
**dadurch gekennzeichnet, dass** das Polyestermaterial ein zahlenmittleres Molekulargewicht (Mn) von mindestens 6100 Da gemäß Messung durch Gelpermeationschromatographie unter Verwendung eines Polystyrol-Standards nach ASTM D6579-11 und eine Glasübergangstemperatur (Tg) von mindestens 80 °C gemäß Messung nach ASTM D6604-00 (2013) aufweist; wobei das Mittel zur Erhöhung des Molekulargewichts (c) eine Polysäure, ein Polyol oder eine Kombination davon umfasst;
wobei die Polysäure eine Disäure der allgemeinen Formel (I)
**ROOC-Xₙ-COOR** Formel (I)
umfasst, wobei R jeweils unabhängig für Wasserstoff oder eine Alkyl-, Alkenyl-, Alkinyl- oder Arylgruppe steht;
n = 0 oder 1; wobei X für eine Brückengruppe steht, die aus einer Alkylengruppe, einer Alkenylengruppe, einer Alkinylengruppe und einer Arylengruppe ausgewählt ist; wobei die Brücke zwischen den -COOR-Gruppen C₁ oder C₂ ist;
und wobei die Hydroxylgruppen des Polyols über eine C₁- bis C₃-Alkylengruppe verbunden sind.

14. Beschichtungszusammensetzung nach einem der vorhergehenden Ansprüche, die weitgehend frei von Bisphenol A (BPA) und Derivaten davon ist.

15. Lebensmittel- und/oder Getränkebehälter, der mindestens teilweise mit einer Beschichtungszusammensetzung nach einem der vorhergehenden Ansprüche beschichtet ist.

## Revendications

1. Composition de revêtement pour un récipient d'aliment et/ou de boisson comprenant un matériau de polyester, dans laquelle le matériau de polyester comprend le produit de réaction de :
(a) 1,2-propanediol,
(b) acide téréphtalique, et
(c) un agent augmentant le poids moléculaire,
**caractérisée en ce que** le matériau de polyester a un poids moléculaire moyen en nombre (Mn) d'au moins 6 100 Da tel que mesuré par chromatographie de perméation de gel en utilisant un standard de polystyrène selon l'ASTM D6579-11 et une température de transition vitreuse (Tg) d'au moins 80 °C telle que mesurée selon l'ASTM D6604-00(2013) ;
dans laquelle l'agent augmentant le poids moléculaire (c) comprend un polyacide, un polyol ou une combinaison de ceux-ci ;
dans laquelle le polyacide comprend un diacide de formule générale (I)
ROOC-Xₙ-COOR formule (I)
dans lequel chaque R représente indépendamment hydrogène ou un groupe alkyle, alcényle, alcynyle, ou aryle ;
n = 0 ou 1 ; dans lequel X représente un groupe de pontage choisi parmi : un groupe alkylène ; un groupe alcénylène ; un groupe alcynylène ; un groupe arylène ; dans lequel le pont entre les groupes -COOR est C₁ ou C₂ ;
et dans lequel les groupes hydroxyle du polyol sont reliés par un groupe alkylène en C₁ à C₃.

2. Composition de revêtement selon la revendication 1, dans laquelle le polyacide comprend de l'anhydride maléique ou de l'acide itaconique ou une combinaison de ceux-ci.

3. Composition de revêtement selon l'une quelconque des revendications 1 ou 2, dans laquelle le polyol comprend du triméthylolpropane, du glycérol ou une combinaison de ceux-ci.

4. Composition de revêtement selon l'une quelconque des revendications précédentes, dans laquelle le rapport molaire de (a):(b) est dans la plage de 5:1 à 1:5.

5. Composition de revêtement selon l'une quelconque des revendications précédentes, dans laquelle le rapport molaire de (a) + (b) : (c) est dans la plage de 100:1 à 1:1.

6. Composition de revêtement selon l'une quelconque des revendications précédentes, les compositions de revêtement comprenant de 1 à 100 % en poids du matériau de polyester sur la base du poids total de matières solides de la composition de revêtement.

7. Composition de revêtement selon l'une quelconque des revendications précédentes, la composition de revêtement comprenant en outre un agent de réticulation.

8. Composition de revêtement selon la revendication 7, dans laquelle l'agent de réticulation comprend une résine phénolique.

9. Composition de revêtement selon l'une quelconque des revendications précédentes, dans laquelle le matériau de polyester a un indice d'hydroxyle brut (OHV) de 0 à 30 mg de KOH/g.

10. Composition de revêtement selon l'une quelconque des revendications précédentes, dans laquelle le matériau de polyester a un indice d'acide (AV) de 0 à 20 mg KOH/g.

11. Composition de revêtement selon l'une quelconque des revendications précédentes, la composition de revêtement comprenant de 1 à 100 % en poids du matériau de polyester sur la base du poids total de matières solides de la composition de revêtement.

12. Composition de revêtement selon l'une quelconque des revendications précédentes, la composition de revêtement comprenant en outre un additif ou une combinaison d'additifs.

13. Composition de revêtement pour un récipient d'aliment et/ou de boisson comprenant un matériau de polyester, le matériau de polyester comprenant le produit de réaction d'un procédé à une étape, le procédé à une étape comprenant la mise en contact de :
(a) 1,2-propanediol,
(b) acide téréphtalique, et
(c) un agent augmentant le poids moléculaire de type polyol,
**caractérisée en ce que** le matériau de polyester a un poids moléculaire moyen en nombre (Mn) d'au moins 6 100 Da tel que mesuré par chromatographie de perméation de gel en utilisant un standard de polystyrène selon l'ASTM D6579-11 et une température de transition vitreuse (Tg) d'au moins 80 °C telle que mesurée selon l'ASTM D6604-00(2013) ;
dans laquelle l'agent augmentant le poids moléculaire (c) comprend un polyacide, un polyol ou une combinaison de ceux-ci ;
dans laquelle le polyacide comprend un diacide de formule générale (I)
ROOC-Xₙ-COOR formule (I)
dans lequel chaque R représente indépendamment hydrogène ou un groupe alkyle, alcényle, alcynyle, ou aryle ;
n = 0 ou 1 ; dans lequel X représente un groupe de pontage choisi parmi : un groupe alkylène ; un groupe alcénylène ; un groupe alcynylène ; un groupe arylène ; dans lequel le pont entre les groupes -COOR est C₁ ou C₂ ;
et dans laquelle les groupes hydroxyle du polyol sont reliés par un groupe alkylène en C₁ à C₃.

14. Composition de revêtement selon l'une quelconque des revendications précédentes, qui est sensiblement exempte de bisphénol A (BPA) et de dérivés de celui-ci.

15. Récipient d'aliment et/ou de boisson revêtu sur au moins une partie de celui-ci avec une composition de revêtement selon l'une quelconque des revendications précédentes.
